# EUROPEAN PATENT APPLICATION

(11) **EP 2 536 164 A1**
(43) Date of publication of application: **19.12.2012**
(21) Application number: 12161521.5
(22) Date of filing: 27.03.2012
(51) Int. Cl.: H04N 21/422, H04N 21/436

(54) **Display apparatus for setting remote controller device and displaying method thereof**

(30) Priority: 17.06.2011 KR 20110059301
(71) Applicant: Samsung Electronics Co., Ltd., Suwon-si, Gyeonggi-do, 443-742 (KR)
(72) Inventor: Kim, Min-sup, Gyeonggi-do (KR); Kim, Kwan-young, Seoul (KR); Yun, Hyun-kyu, Seoul (KR)
(74) Representative: Bruce, Alexander Richard Henry

(57) **Abstract**

A display apparatus, a displaying method thereof, and a remote controller device are provided, the display method including: a displaying method of a display apparatus which is connected to at least one external device and which communicates with a remote controller, the displaying method including: acquiring selection conditions for the at least one external device connected to the display apparatus; and if an external device from among the at least one external device is selected according to the selection conditions, displaying a first user interface (UI) comprising a setting code for setting the selected external device as a control object of the remote controller device, wherein the setting code comprises code values corresponding to interface types of the display apparatus and the selected external device.

## Description

Embodiments of the present invention relate to a display apparatus and a displaying method thereof, and more particularly, to a display apparatus for setting a remote controller device and a displaying method thereof.

Many households have connected external devices, such as a digital versatile disk (DVD) player, a home theater, etc., connected to a television (TV), to be provided with various types of contents. A universal remote controller may be used as a means for controlling the external devices. The universal remote controller refers to a remote controller device which has key codes that are set with respect to several external devices and thus can control the several external devices regardless of manufacturing companies, types, etc. of the several external devices.

Users can set key codes corresponding to their own external devices in order to use universal remote controllers.

It is known that a user directly searches for and sets a key code through a code book provided by a universal remote controller manufacturing company and a method by which a user sets a key code by using a personal computer (PC) and/or some PC-based tool used only for a remote controller.

In the former method, the user usually searches for the key code based on a type and manufacturing company information of an external device. However, many key codes corresponding to the corresponding conditions exist, and thus tests need to be performed with respect to all of the key codes.

In the latter method, the user needs to learn the PC/PC-based tool beforehand and the PC/PC-based tool needs to be equipped with an additional interface between a PC and a universal remote controller. Therefore, additional cost is required.

Accordingly, a method of setting a universal remote controller through an improved method is desirable.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a display apparatus which displays a setting code for setting a remote controller device and sets a control object of the remote controller device by using the setting code, and a displaying method thereof.

According to an aspect of an exemplary embodiment, there is provided a displaying method of a display apparatus which is connected to at least one external device and which communicates with a remote controller, the displaying method including: acquiring selection conditions for the at least one external device connected to the display apparatus; and if an external device from among the at least one external device is selected according to the selection conditions, displaying a first user interface (UI) including a setting code for setting the selected external device as a control object of the remote controller device, wherein the setting code includes code values corresponding to interface types of the display apparatus and the selected external device.

The setting code further may include a unique key code value of the selected external device.

The setting code further may include a code value corresponding to a type of the selected external device.

A code value from among the plurality of code values may be for selecting an interface type to which the selected external device is connected, and for displaying an image signal output from the selected external device on the display apparatus.

The displaying method may further include: if a first code value having preset digits is received from the remote controller device, receiving a confirm key signal; if the confirm key signal is received, determining whether a second code value is received from the remote controller device corresponding to the setting code; and if the second code value corresponds to the setting code, selecting a connection port connected to the selected external device, and if the second code value does not correspond to the setting code, outputting a message which requests a re-entry of the setting code.

The first UI may display an input code display area, which displays code values received from the remote controller device, and displays information regarding setting information and the setting code.

The acquiring of the selection conditions may include: displaying information regarding at least one group, into which a plurality of devices are classified by type, on a second UI; if one of the at least one group is selected, classifying devices of the selected one of the plurality of groups by brand and model and displaying the classified devices on the second UI; and if one of the classified devices is selected, displaying interface information, for selecting an interface type to which the selected device is connected, on the second UI.

The displaying of the first UI may include: detecting a unique key code value corresponding to the selected external device from stored unique key code values; determining a first code value corresponding to a type of the selected external device; checking a connection port, to which the selected external device is connected, to determine a second code value corresponding to an interface type; combining the detected unique key code value with the determined first and second code values to generate the setting code; and displaying a second UI including the setting code.

According to another aspect of an exemplary embodiment, there is provided a display apparatus which is connected to at least one external device among a plurality of external devices including: a display unit; a storage unit which stores setting codes respectively matching with the plurality of external devices; a connector which is connected to the least one external device from among the plurality of external devices; a signal receiver which receives a user command from the remote controller device; and a controller which, if selection conditions for one of the at least one external device connected to the display apparatus are acquired, controls the display unit to display a user interface (UI) including a setting code for setting a selected external device, which is selected from among the at least one external device according to the selection conditions, as a control object of the remote controller device, wherein the setting code corresponds to an interface type.

The setting code may include a unique key code value of the selected external device.

The setting code may include a code value corresponding to a type of the selected external device.

The interface type may include a code value which corresponds to a type of interface to which the selected external device is connected.

If a confirm key signal is received from the remote controller device via the signal receiver, the controller may determine whether a code value received from the remote controller device corresponds to the setting code, wherein if the code value corresponds to the setting code, the controller may select a connection port connected to the selected external device, and wherein if the code value does not correspond to the setting code, the controller may output a message requesting a re-entry of the setting code.

The UI may display an input code display area, which displays code values received from the remote controller device, information regarding the setting information and the setting code.

The controller may control the display unit to display on the UI information regarding a plurality of groups into which the plurality of external devices are classified by type, wherein if one of the plurality of groups is selected, the controller may classify devices of the selected group by brand and model, and may control the display unit to display the classified devices on the UI, and wherein if one of the classified devices is selected, the controller may control the display unit to display on the UI interface information for selecting the interface type.

The controller may detect a unique key code value corresponding to the selected external device from stored unique key code values and generates the setting code by combining a first code value, which corresponds to a connection port to which the selected external device is connected, and a second code value, which corresponds to a type of the selected external device.

According to another aspect of an exemplary embodiment, there is provided a remote controller device which communicates with a display apparatus and an external device connected to the display apparatus, the remote controller device including: an input unit which receives a setting code for the external device; a controller which may receive a first code value corresponding to the setting code to set the external device as a control obj ect; and a transmitter which may transmit the setting code to the display apparatus, wherein the setting code may include a second code value corresponding to an interface type.

The setting code may further include a unique key code value of the external device.

The setting code may further include a third code value corresponding to a type of the external device.

The interface type may correspond to a type of interface to which the selected external device is connected.

If a predetermined code value is input, the controller may control the transmitter to transmit a confirm key signal to the display apparatus.

The controller may control the transmitter to transmit selection information for the external device to the display apparatus.

The controller may control the transmitter to transmit selection information for the interface type to the display apparatus.

According to another aspect of an exemplary embodiment, there is provided a displaying method of a display apparatus which is connected to a connected external device and which communicates with a remote controller, the displaying method including: displaying a first user interface (UI) including a list including information corresponding to the connected external device; displaying a second UI for searching stored information corresponding to at least one of a brand and a model of each of a plurality of external devices including at least one of a brand and a model of the connected external device; displaying a third UI including interface information corresponding to the connected external device based on an input received via the second UI; and displaying a fourth UI including a unique key code corresponding to at least one of the brand, the model and the interface information of the connected external device; receiving a setting code; determining whether the received setting code corresponds to the displayed unique key code; and if the received setting code corresponds to the displayed unique key code, displaying an indicator which indicates that the received setting code corresponds to the displayed unique key code.

The input received via the second UI may corresponds to a selection for the at least one of the brand and the model of the selected external device.

The connected device may be connected wirelessly to the display apparatus.

If the received setting code corresponds to the displayed unique key code, the method may further include displaying a message indicating the inputting of the setting code is complete.

The above and/or other aspects will be more apparent by describing in detail exemplary embodiments, with reference to the accompanying drawings, in which:
FIG. 1 is a view illustrating a system for realizing a method of setting a remote controller device according to an exemplary embodiment;
FIG. 2 is a block diagram illustrating a structure of a display apparatus according to an exemplary embodiment;
FIG. 3 is a block diagram illustrating a detailed structure of the display apparatus, according to an exemplary embodiment;
FIG. 4 is a block diagram illustrating a structure of a remote controller device according to an exemplary embodiment;
FIGS. 5A through 5E are views illustrating a method of setting a control object of the remote controller device by using the display apparatus, according to an exemplary embodiment;
FIG. 6 is a flowchart illustrating a displaying method of a display apparatus according to an exemplary embodiment; and
FIG. 7 is a flowchart illustrating a method of setting a remote controller device by using a display apparatus, according to an exemplary embodiment.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

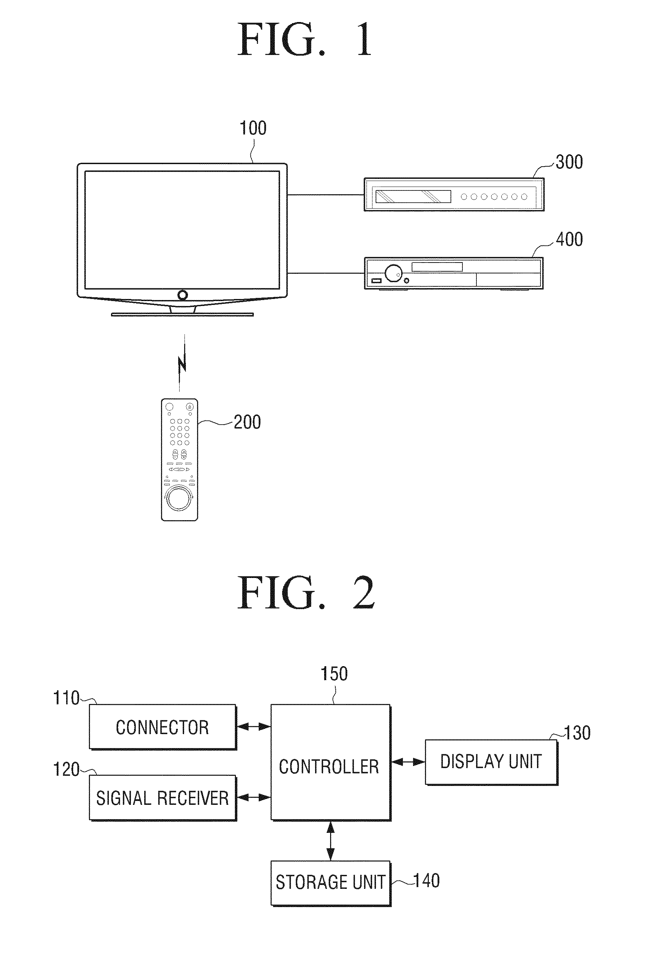

FIG. 1 is a view illustrating a system for realizing a method of setting a remote controller device 200 according to an exemplary embodiment. As shown in FIG. 1, the system according to the present exemplary embodiment includes a display apparatus 100, the remote controller device 200, and a plurality of external devices 300 and 400.

If an external device is selected by the remote controller device 200, the display apparatus 100 displays a user interface (UI) including a setting code for setting the selected external device as a control object of the remote controller device 200. Here, the setting code includes a code value of an input source that is a code value for selecting an interface type to which the selected external device is connected, so as to display an image signal output from the selected external device on the display apparatus 100.

Also, the setting code may further include a unique key code value of the selected external device and a code value corresponding to a type of the selected external device.

The remote controller device 200 receives a user command to control an operation of the display apparatus 100 and transmits the user command to the display apparatus 100. If the setting code displayed on the display apparatus 100 is input, the remote controller device 200 may be set to control an operation of one of the plurality of external devices 300 and 400 which are connected to the display apparatus 100 and correspond to the input setting code.

In other words, the remote controller device 200 may map a unique key code value of an external device to each of a plurality of control buttons of the remote controller device 200 by using a code value corresponding to a type of the external device in order to control an operation of the selected external device.

Since the remote controller device 200 controls operations of the display apparatus 100 and the plurality of external devices 300 and 400 based on the setting code as described above, the remote controller device 200 may be realized as a universal remote controller.

Also, if a code value having preset digits is input so as to correspond to the setting code, the remote controller device 200 may transmit a confirm key signal to the display apparatus 100. Here, the confirm key signal is a signal indicating that the code value having the preset digits has been completely input into the remote controller device 200.

If the display apparatus 100 receives the confirm key signal from the remote controller device 200, the display apparatus 100 determines whether the code value input into the remote controller device 200 corresponds to the setting code.

If it is determined that the code value corresponds to the setting code, the display apparatus 100 may select a connection port, to which the selected external device is connected, based on the code value of the input source of the setting code. If it is determined that the code value does not correspond to the setting code, the display apparatus 100 may output a message which is to induce a re-entry of the setting code.

As described above, according to an exemplary embodiment, the display apparatus 100 displays a setting code for selecting an external device as a control object. Therefore, a user may set the remote controller device 200 to further easily control a particular external device.

Also, the setting code includes a code value for setting a connection port to which the selected external device is connected. Therefore, the user may watch an image signal, which is output from an external device to be controlled, on the display apparatus 100 without an additional control.

The display apparatus 100 may be a digital TV or the like but is not limited thereto. The display apparatus 100 may be any type of apparatus which can be connected to a plurality of external devices to receive image or audio signals and can operate according to a user command transmitted from the remote controller device 200.

The plurality of external devices 300 and 400 are connected to the display apparatus 100 to output image and/or audio signals. Therefore, the plurality of external devices 300 and 400 may be realized as digital versatile disks (DVDs), video cassette recorders (VCRs), set-top boxes, or the like but are not limited thereto. Therefore, the plurality of external devices 300 and 400 may be any type of devices which can receive a user command from the remote controller device 200 to operate and can transmit image and/or audio signals to the display apparatus 100.

FIG. 2 is a block diagram illustrating a structure of the display apparatus 100, according to an exemplary embodiment. Referring to FIG. 2, the display apparatus 100 includes a connector 110, a signal receiver 120, a display unit 130, a storage unit 140, and a controller 150.

The connector 110 connects the display apparatus 100 to an external device. In other words, the connector 110 includes at least one connection port, which is to be connected to at least one external device, to operate as an input source which is to receive an image signal and an audio signal from the external device. Therefore, the connector 110 may be realized as an interface such as S-Video, a component, a composite, D-Sub, a digital video interface (DVI), a high definition multimedia interface (HDMI), or the like. Also, the connector 110 may connect the display apparatus 100 to the external device through a wireless method, such as BlueTooth (BT), wireless HDMI-consumer electronics control (CEC), or the like, to receive the image signal and the audio signal from the external device.

The signal receiver 120 receives a user command from the remote controller device 200. In other words, the signal receiver 120 receives a remote control signal generated by the remote controller device 200 and transmits the remote control signal to the controller 150, so that the display apparatus 100 performs a functional operation corresponding to the remote control signal. Here, the remote control signal may be an infrared signal corresponding to a code value assigned to each of control buttons of the remote controller device 200.

In particular, the signal receiver 120 may receive a user command, which is to change a control object, and a user command, which is to select a particular external device as a control object, from the remote controller device 200. Also, if a code value having preset digits is input from the remote controller device 200, the signal receiver 120 may receive a confirm key signal.

The display unit 130 may display a UI which is to acquire selection conditions of a user for one of a plurality of external devices connected to the display apparatus 100. The display unit 130 may be realized as a liquid crystal display (LCD) panel as in a general display apparatus but is not necessarily limited thereto.

In more detail, the display unit 130 may display information regard a plurality of groups into which external devices are classified according to their types. Also, if one of the plurality of groups is selected, the display unit 130 may classify and display external devices of the selected group according to brands and models. If one of the classified external devices is selected, the display unit 130 may display input source information of the display apparatus 100 on the UI to select an interface type to which the selected external device is connected.

In the present exemplary embodiment, external devices of a selected group are classified and displayed according to brands and models, but this is only an example. Therefore, search windows for searching the selected group for the external devices according to the brands and models may be sequentially displayed.

Also, if selection conditions of a user for one of a plurality of external devices connected to the display apparatus 100 are acquired, the display unit 130 may display a UI which includes a setting code for setting an external device selected according to the selection conditions as a control object of a remote controller device. Here, the setting code refers to a code which is formed of a combination of a unique key code value of the selected external device, a code value corresponding to a type of the selected external device, and a code value of an input source.

The storage unit 140 stores information regarding external devices.

In more detail, the storage unit 140 may store information regarding a plurality of external devices connected to the display apparatus 100, i.e., information regarding types, brands, and models of the plurality of external devices. The storage unit 140 may receive and store the information from an external server by using a communication network such as the Internet or the like and may update the information according to a user command or each preset time period.

The storage unit 140 also stores setting codes respectively matching with the external devices.

In more detail, the storage unit 140 may store unique key code values respectively corresponding to the external devices, code values assigned according to types of the external devices, and code values assigned according to input sources to which the external devices are connected. The storage unit 140 may also store a setting code which is generated based on these code values.

Here, the unique key code values respectively corresponding to the external devices are code values which are to remote-control various functional operations assigned to the plurality of external devices and which are generally set when manufacturing the external devices. Therefore, the display apparatus 100 may receive and store key code values, which may be applied to external devices according to types, manufacturing companies (brands), and models, from an external server (not shown) through a communication network such as the Internet or the like. The display apparatus 100 may periodically update pre-stored unique key code values according to each preset time period or a request of a user or may receive and store unique key code values which are not stored.

The code values corresponding to the types of the external devices may be code values which are to map the unique key code values of the external devices to a plurality of control buttons of the remote controller device 200 according to the types of the external devices.

For example, if a unique key code value corresponding to a particular DVD player is input through the remote controller device 200, and a code value corresponding to a type of an external device, i.e., the DVD player, is input, the unique key code value of the external device corresponding to the particular DVD player may be mapped to control buttons of the plurality of control buttons of the remote controller device 200 which are assigned to control the DVD player.

A code value assigned according to an interface type to which an external device is connected may be a code value which is to identify an interface type which receives an image input from the external device.

For example, if a code value corresponding to a HDMI terminal is input, the corresponding HDMI terminal may be selected to display an image input through the corresponding HDMI terminal.

The controller 150 controls overall operations of elements of the display apparatus 100. In other words, the controller 150 controls the elements of the display apparatus 100 according to the remote control signal of the remote controller device 200 received by the signal receiver 120, so that the display apparatus 100 performs an operation corresponding to the remote control signal.

For example, if the controller 150 receives a command to change a control object from the remote controller device 200, the controller 150 may control the display unit 130 to display the UI which is to select one of the plurality of external devices connected to the display apparatus 100.

Also, if selection conditions of the user for one of the plurality of external devices connected to the display apparatus 100 are acquired, the controller 150 controls the display unit 130 to display a UI including a setting code for setting the external device selected according to the selection conditions as a control object of the remote controller device 200.

In other words, if the controller 150 receives a user command, which is to select a particular external device on the UI, from the remote controller device 200, the controller 150 may generate a setting code corresponding to the selected external device and display the UI including the generated setting code through the display unit 130.

In more detail, the controller 150 may detect a unique key code value corresponding to the selected external device and a code value corresponding to a type of the selected external device from pre-stored code values according to information regarding the type, a brand, and a model of the external device selected on the UI. Also, the controller 150 may determine a code value corresponding to an interface type according to selected interface information and combine the code values to generate a setting code corresponding to the selected external device.

For example, it is assumed that the user selects a DVD player among the plurality of external devices connected to the display apparatus 100, and the DVD player is connected to the display apparatus 10 through a HDMI interface.

Here, if a unique key code value of the DVD player is "2849," a code value assigned to the DVD player according to a type of the external device is "2," and a code value assigned to the HDMI interface, to which the DVD player is connected, is "1," the controller 150 may detect the corresponding code values from the storage unit 140 and sequentially combine the code values to generate a setting code corresponding to the DVD player as "284921." Also, the controller 150 may control the storage unit 150 to store the generated setting code.

In the above-described exemplary embodiment, a UI is displayed on the display unit 130 which is to acquire selection conditions for one of a plurality of external devices, but this is only an example.

When the controller 150 displays the setting code on the UI, the controller 150 may display an input code display area, a setup command display area, and information regarding the setting code on a side of the setting code along with the setting code. Here, the input code display area refers to an area which is to sequentially display code values that are input through the remote controller device 200 to correspond to the setting code. Also, the setup command display area refers to an area which is to display a user command input to start a setup of the setting code. The information regarding the setting code may be information indicating meanings of code values constituting the setting code.

For example, it is assumed that the setting code "284921" corresponding to the DVD player is displayed on the display unit 130, and the user sequentially inputs the setting code "284921" through the control buttons of the remote controller device 200, i.e., figure buttons, based on this.

In this case, the controller 150 may sequentially display code values "284921," which are input through the remote controller device 200, in the input code display area on the UI.

However, if a code value, which is input into the remote controller device 200 and received by the signal receiver 120, does not correspond to the setting code, the controller 150 may display the display unit 130 to display only a code value corresponding to the setting code in the input code display area.

In other words, in the above-described exemplary embodiment, the user inputs "284921" through the remote controller device 200 or the user inputs "284921" into the remote controller device 200. However, if the signal receiver 120 receives "284921," "284921" are sequentially displayed in the input code display area.

Also, if the controller 150 receives a confirm key signal from the remote controller device 200, the controller 150 may determine whether a code value input into the remote controller device 200 corresponds to the setting code. Here, the confirm key signal is a signal indicating that a code value having preset digits has been completely input into the remote controller device 200. The preset digits are equal to digits of a code value constituting the setting code.

In more detail, if the controller 150 receives the confirm key signal from the remote controller device 200, the controller 150 sequentially compares the code value received from the remote controller device 200 with the setting code to determine whether all of a unique key code value of an external device constituting the setting code, a code value corresponding to a type of the selected external device, and a code value corresponding to an interface type have been input into the remote controller device 200.

If it is determined that the code value received from the remote controller device 200 corresponds to the setting code, the controller 150 may select a connection part to which an external device corresponding to the setting code is connected. Also, the controller 150 may control the display unit 130 to output a message indicating that the input of the setting code has been normally completed.

In other words, the setting code includes a code value corresponding to an interface type, and the code value corresponding to the interface type is a code value which is sequentially assigned according to the interface type. Therefore, the controller 150may select a connection port to which an external device corresponding to the setting code is connected, based on this and display an image signal input through the connection port.

For example, it is assumed that the connector 110 includes connection ports of a HDMI terminal and a D-Sub terminal, a DVD player is connected to the HDMI terminal, and a VCR is connected to the D-Sub terminal. In this case, the controller 150 may allocate code value 1 to the HDMI terminal and code value 2 to the D-Sub terminal. Also, if the controller 150 receives "1" as a code value corresponding to an interface type from the remote controller device 200, the controller 150 may control to display an image signal input from the HDMI terminal in order to display an image output from the DVD player.

If it is determined that the code value received from the remote controller device 200 does not correspond to the setting code, the controller 150 may output a message which is to induce a re-entry of the setting code.

In more detail, if the user inputs a code value, which does not correspond to the setting code, through the remote controller device 200 or the user inputs a correct code value corresponding to the setting code but receives a code value that does not correspond to the setting code due to an external factor, the controller 150 may display a message, which is to request a re-entry of the setting code, on the UI. Here, the latter case indicates a case where when the user inputs a code value into the remote controller device 200, the remote controller device 200 is hidden by another object or the user, and thus an infrared signal corresponding to the input code value is not transmitted to the display apparatus 100.

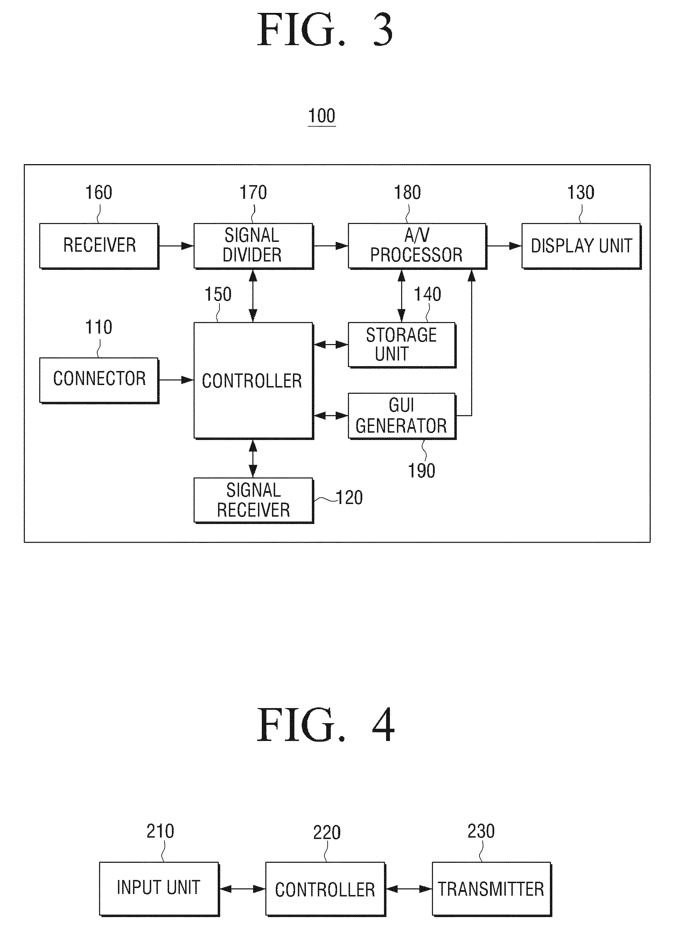

FIG. 3 is a block diagram illustrating a detailed structure of the display apparatus 100 according to an exemplary embodiment. Referring to FIG. 3, the display apparatus 100 includes a connector 110, a signal receiver 120, a display unit 130, a storage unit 140, a controller 150, a receiver 160, a signal divider 170, an audio/video (A/V) processor 180, and a graphical user interface (GUI) processor 190. Detailed descriptions of the present exemplary embodiment overlapping with those of the previous exemplary embodiment of FIG. 2 will be omitted herein.

The receiver 160 receives broadcasting from a broadcasting station or a satellite by wire or wireless and demodulates the broadcasting. In more detail, the receiver 160 may be realized as at least one tuner. The receiver 160 may include a plurality of tuners to simultaneously receive broadcastings from a plurality of channels.

The signal divider 170 divides a broadcasting signal into an image signal, an audio signal, and broadcasting information. The signal divider 170 transmits the image signal and the audio signal to the A/V processor 180 and the broadcasting information to the storage unit 140, the controller 150, and the GUI generator 190.

The A/V processor 180 performs signal processing, such as video decoding, video scaling, audio decoding, etc., with respect to the image and audio signals input from the signal divider 170 and the connector 110. The A/V processor 180 also outputs the image signal to the display unit 130 and the audio signal to an audio output unit (not shown).

If the A/V processor 180 stores the image and audio signals in the storage unit 140 or transmits the image and audio signals to an external device through the connector 110, the A/V processor 180 compresses the image and audio signals and then outputs the compressed image and audio signals to the storage unit 140 or the connector 110.

The display unit 130 displays an image, which is output from the A/V processor 130, on a display or outputs the image to a connected external device (e.g., an external display) through an external output terminal.

In particular, the display unit 130 displays a UI which is to acquire selection conditions of a user for one of a plurality of external devices connected to the display apparatus 100. If an external device is selected according to the selection conditions, the display unit 130 may display a setting code for setting the selected external device as a control object of the remote controller device 200. Here, the setting code may be a code which is formed of a combination of a unique key code value of the selected external device, a code value corresponding to a type of the selected external device, and a code value corresponding to an interface type.

The audio output unit (not shown) outputs sound, which is output from the A/V processor 180, through a speaker or outputs the sound to a connected external device (e.g., an external speaker) through an external output terminal.

The connector 110 includes at least one connection port, which is to be connected to at least one external device, to operate as an interface which is to receive an image signal and an audio signal from an external device. Therefore, the connector 110 may be realized as an interface such as S-Video, a component, D-Sub, a DVI, a HDMI, or the like. Also, the connector 110 may connect the display apparatus 100 to an external device through a wireless method, such as BT, Wireless HDMI-CEC, or the like, to receive an image signal and an audio signal from the external device.

The connector 110 may connect the display apparatus 100 to a communication network, such as the Internet or the like, or to an external server to receive a unique key code value corresponding to an external device.

The storage unit 140 stores information regarding external devices, i.e., information regarding a plurality of external devices connected to the display apparatus 100 (i.e., information regarding types, brands, and models of the plurality of external devices). The storage unit 140 also stores setting codes which respectively match with the external devices.

In more detail, the storage unit 140 may store unique key code values respectively corresponding to the external devices, code values assigned according to types of the external devices, and code values assigned according to interface types to which the external devices are connected. Also, the storage unit 140 may store a setting code which is generated based on these code values.

The GUI generator 190 generates a GUI which is to be displayed on a screen and adds the GUI to the image output from the A/V processor 180.

In more detail, the GUI generator 190 may generate a UI for selecting one of the plurality of external devices connected to the display apparatus 100 and a UI including a setting code corresponding to the selected external device and an input code display area and may add the UIs to the output image. Here, the input code display area refers to an area which is to sequentially display a code value which is input through the remote controller device 200 so as to correspond to the setting code.

Also, the GUI generator 190 may generate a GUI, which includes a message indicating that an input of the setting code has been normally completed or a message for inducing a re-entry of the setting code, according to whether the setting code has been normally input and may add the GUI to the output image.

The signal receiver 120 receives a user command from the remote controller device 200. In other words, the signal receiver 120 receives a remote control signal generated by the remote controller device 200 and transmits the remote control signal to the controller 150, so that the display apparatus 100 performs a functional operation corresponding to the remote control signal. Here, the remote control signal may be an infrared signal which is generated based on code values respectively assigned to control buttons of the remote controller device 200 according to a unique key code value.

In particular, the signal receiver 120 may receive a user command, which is to change a control object, and a user command, which is to select a particular external device as a control object, from the remote controller device 200. The signal receiver 120 may also receive an infrared signal that is according to a code value which is input from the remote controller device 200 to correspond to the setting code. The signal receiver 120 may also receive a confirm key signal from the remote controller device 200.

An input unit (not shown) may be realized as a control panel including a plurality of control buttons to receive a user command to control an operation of the display apparatus 100 and transmit the user command to the controller 150.

In particular, the input unit (not shown) may include a control object change button, which outputs a UI for selecting one of the plurality of external devices as a control object of the remote controller device 200, etc.

The controller 150 controls elements of the display apparatus 100 based on the user command, which is input from the signal receiver 120 or the input unit, to perform an operation corresponding to the user command.

For example, if the controller 150 receives a command to change a control object from the input unit and the remote controller 200, the controller 150 may control the display unit 130 to display a UI for acquiring selection conditions of a user for one of the plurality of external devices connected to the display apparatus 100. Also, if a particular external device is selected, the controller 150 may control the display unit 130 to generate and display a setting code corresponding to the selected external device. When displaying the setting code on the UI, an input code display area, a setup command display area, and information regarding the setting code may be displayed on a side of the setting code along with the setting code.

If the controller 150 receives the confirm key signal from the remote controller device 200, the controller 150 may determine whether a code value input into the remote controller device 200 corresponds to the setting code and display a message depending on the determination result through the display unit 130. Here, the confirm key signal may be a signal indicating that a code value having preset digits has been completely input into the remote controller device 200.

If it is determined that the code value received from the remote controller device 200 corresponds to the setting code, the controller 150 may control the display unit 130 to select a connection port to which an external device corresponding to the setting code is connected and output a message indicating that the input of the setting code has been normally completed.

If it is determined that the code value received from the remote controller device 200 does not correspond to the setting code, the controller 150 may output a message for inducing a re-entry of the setting code through the display unit 130.

FIG. 4 is a block diagram illustrating a structure of the remote controller device 200, according to an exemplary embodiment. Referring to FIG. 4, the remote controller device 200 includes an input unit 210, a controller 220, and a transmitter 230.

The input unit 210 receives a user command which is to control operations of the display apparatus 100 and the plurality of external devices 300 and 400.

In more detail, the input unit 210 may be realized as a plurality of control buttons respectively corresponding to the operations of the display apparatus 100 and the plurality of external devices 300 and 300, such as a channel search button, a volume button, a play button, a stop button, a confirm button, etc.

In particular, the input unit 210 may include a control object change button, which receives a user command to change a control object of the remote controller device 200, to receive selection conditions of a user for one of the plurality of external devices 300 and 400 connected to the display apparatus 100. The input unit 210 may also include a setting button which is to receive a command to start an input of a setting code and a figure button which is to input a code value corresponding to the setting code. Therefore, the input unit 210 may receive setting codes respectively corresponding to the external devices 300 and 400 connected to the display apparatus 100.

The controller 220 controls elements of the remote controller device 200 based on the user command input from the input unit 210 to perform an operation corresponding to the user command.

In particular, if an external device is selected according to the selection conditions, and thus the setting code is displayed on the display apparatus 100, the controller 220 may receive a code value corresponding to the setting code and set the selected external device as a control object.

In other words, if the code value corresponding to the setting code displayed on the display apparatus 100 is input through the input unit 210, the controller 220 may control the elements of the remote controller device 200 to control an operation of one of the plurality of external devices 300 and 400 corresponding to the setting code. As described above, the setting code may include a unique key code value of an external device and a code value corresponding to a type of the external device.

Therefore, the controller 220 may determine an external device that a user desires to control, by using a code value corresponding to a type of the external device and generate a key code value corresponding to a control button, which is input in a code form of the determined external device, by using the unique key code value. The controller 220 may also control the transmitter 230 to transmit the generated key code value to the display apparatus 100 or the plurality of external devices 300 and 400.

In other words, if a number code assigned to the external device to be controlled, i.e., a code value corresponding to a type of the external device, is input into the input unit 210, the controller 220 may assign a key code value corresponding to a particular function of the external device to each control button capable of controlling the external device, based on the unique key code value of the external device. Therefore, the user may remote-control a particular external device through the remote controller device 200.

If a code value having preset digits is input, the controller 220 may generate a confirm key signal. Here, the confirm key signal may be a signal indicating that the code value having the preset digits has been input, and the preset digits may be equal to digits of the setting code. Therefore, information regarding the digits of the code value may be pre-stored.

In more detail, if the code value of the preset digits corresponding to the setting code is input through the input unit 210, the controller 220 may generate the confirm key signal and transmit the confirm key signal to the display apparatus 100 through the transmitter 240.

Various unique key code values and code values corresponding to types of external devices may be stored in a storage unit (not shown). In other words, the storage unit may store unique key code values respectively corresponding to the display apparatus 100 and the plurality of external devices 300 and 400 connected to the display apparatus 100, i.e., code values which are to remote-control various functional operations assigned to the plurality of external devices 300 and 400.

Code values assigned as different values to the plurality of external devices 300 and 400, i.e., code values corresponding to the plurality of external devices 300 and 400, may be stored in the storage unit.

The transmitter 230 transmits the user command, which is input through the input unit 210, to the display apparatus 100 and the plurality of external devices 300 and 400. In particular, the transmitter 230 may transmit a code value, which is input through the input unit 210 and corresponds to the setting code, to the display apparatus 100. Also, the transmitter 230 may transmit selection information of the user for an external device and selection information of the user for an interface type to the display apparatus 100.

In detail, the transmitter 230 may transmit the key code values, which are generated by the controller 220 according to code forms of the display apparatus 100 and the plurality of external devices 300 and 400, in an infrared signal form.

In more detail, the infrared signal transmitted from the transmitter 230 may be a data pulse form having a predetermined code value. Here, a data pulse may include head pulse data for signaling an input of a function control signal, custom pulse data uniquely designated with respect to each manufacturing company, and function control pulse data having a data code for a function control.

In this case, the display apparatus 100 and the plurality of external devices 300 and 400 may be realized to receive remote control pulse data transmitted according to a key input of the remote controller device 200 so as to perform functional operations corresponding to a corresponding function control.

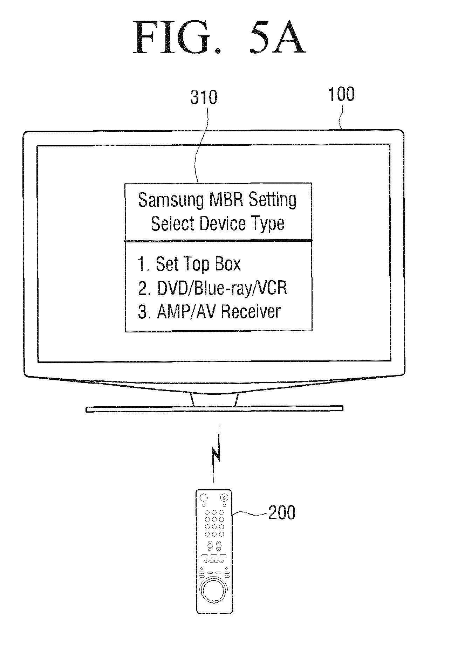

FIGS. 5A through 5E are views illustrating a method of setting a control object of the remote controller device 200 by using the display apparatus 100, according to an exemplary embodiment.

In detail, FIGS. 5A through 5E sequentially illustrate a UI for selecting one of a plurality of external devices connected to the display apparatus 100.

If a user command to change a control object is input through an input unit (not shown) of the display apparatus 100 or the remote controller device 200, information 310 regarding a plurality of groups into which the plurality of external devices are classified is displayed.

For example, as shown in FIG. 5A, "1. Set-top Box, 2. DVD/Blue-ray/VCR, 3. AMP/AV Receiver" are displayed as examples of types of external devices connected to the display apparatus 100. The display apparatus 100 may receive a selection corresponding to one of the types of the plurality of external devices.

If one of the plurality of groups is selected, the display apparatus 100 may display a UI to search the selected group for external devices according to brands and models.

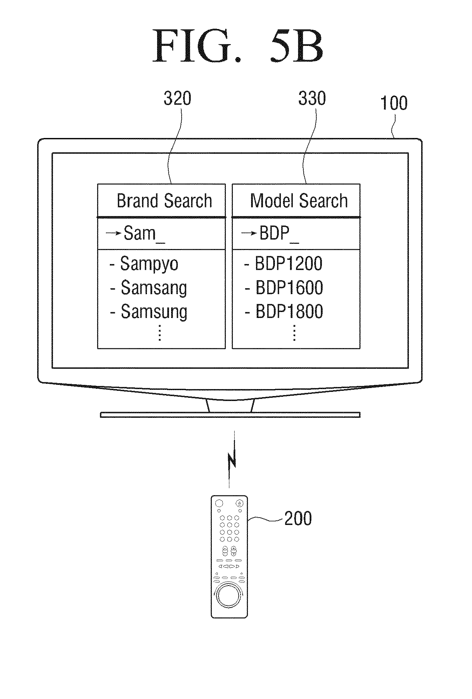

As shown in FIG. 5B, the display apparatus 100 may display a UI 320 for searching for external devices according to brands and a UI 330 for searching for external devices according to models to receive a search command with respect to an external device that a user desires to select.

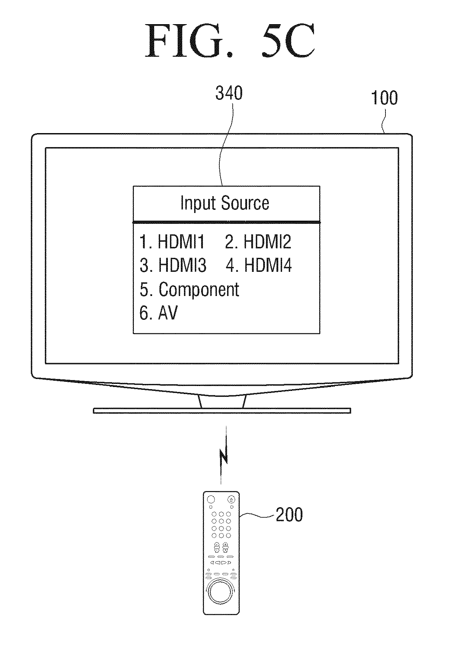

Also, if the user selects an external device having a particular brand and a particular model, interface information of the display apparatus 100 may be displayed on a UI 340 as shown in FIG. 5C. Therefore, an interface type to which the selected external device is connected may be selected.

For example, interface information, such as "1. HDMI1, 2. HDMI2, 3. HDMI3, 4. HDMI4, 5. Component, 6. AV," may be displayed according to types of input ports of the input unit 110 of the display apparatus 100.

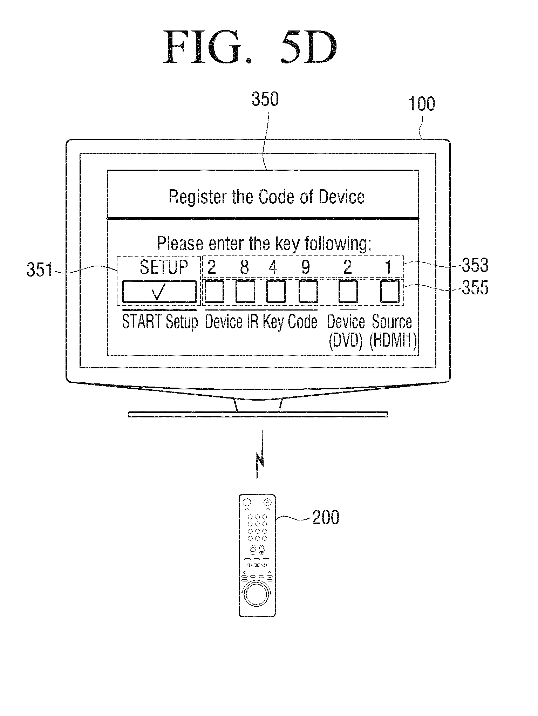

FIG. 5D illustrates a screen which displays a setting code corresponding to a selected external device, according to an exemplary embodiment.

In more detail, if the user selects an external device to be controlled by the remote controller device 200 according to one or more of a type, a brand, and a model of the external device and selects an interface type to which the selected external device is connected, the display apparatus 100 generates a setting code corresponding to the selected external device.

Also, as shown in FIG. 5D, the display apparatus 100 displays a UI 350 including the generated setting code. In detail, the display apparatus 100 may display a setup command display area 351, a setting code 353, and an input code display area 355 on the UI 350 together. Here, the setup command display area 351 refers to an area which is to display a user command input to start a setup of the setting code 353. The input code display area 355 refers to an area which is to sequentially display code values which are input through the remote controller device 200 to correspond to the setting code 353.

In other words, if the user receives a command to start a setup of a setting code through a setting button of the remote controller device 200, the display apparatus 100 may display a "Check" icon in the setup command display area 351. If the user receives a code value corresponding to the setting code from the remote controller device 200, the display apparatus 100 may sequentially compare the received code values with the setting code to display a "Check" icon in the input code display area 355 of a corresponding part.

Also, the display apparatus 100 may display information regarding the setting code, i.e., information regarding code values constituting the setting code, under the input code display area 355. In other words, as shown in FIG. 5D, the display apparatus 100 may display "Device IR Key Code," "Device," and "Source" to indicate that code values constituting the setting code include a unique key code value, a code value corresponding to a type of an external device, and a code value corresponding to an interface type.

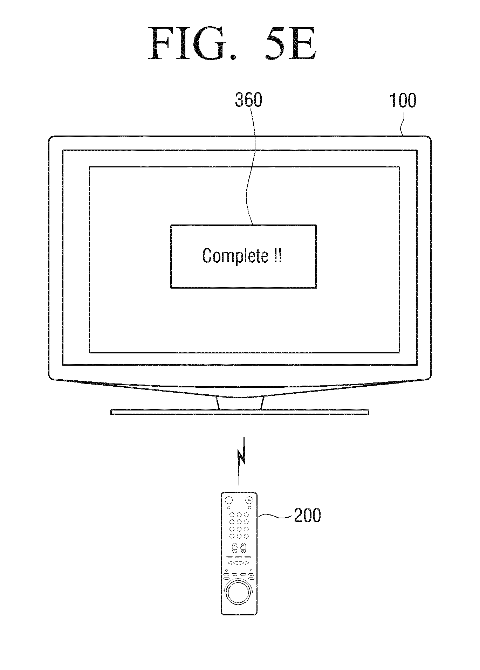

If the display apparatus 100 receives a confirm key signal from the remote controller device 200, the display apparatus 100 determines whether a code value input into the remote controller device 200 corresponds to the setting code. If it is determined that the code value received from the remote controller device 200 corresponds to the setting code, the display apparatus 100 outputs a message 360 indicating that an input of the setting code has been normally completed, as shown in FIG. 5E.

If it is determined that the code value received from the remote controller device 220 does not correspond to the setting code, the display apparatus 100 may re-display the UI 350 to receive a re-entry of the setting code as shown in FIG. 5D. The display apparatus 100 may output an additional message which is to induce a re-entry of the setting code.

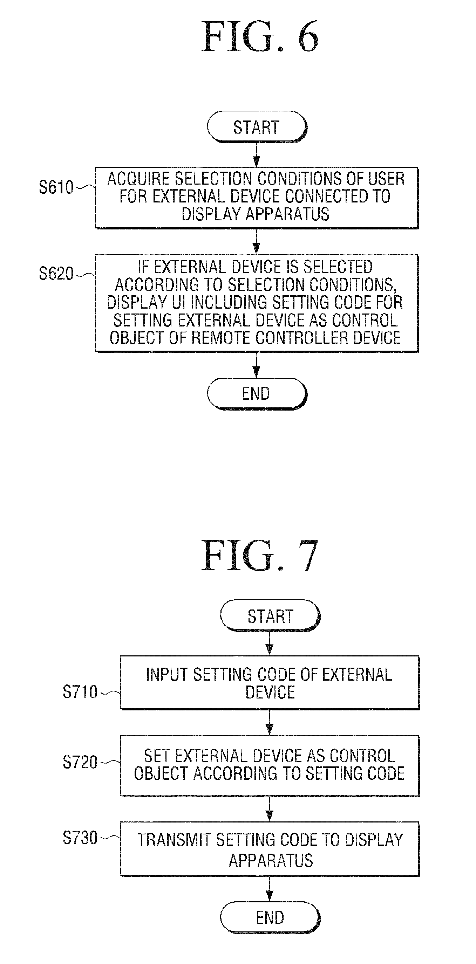

FIG. 6 is a flowchart illustrating a displaying method of a display apparatus according to an exemplary embodiment.

In operation S610, selection conditions of a user for an external device connected to the display apparatus are acquired.

If an external device is selected according to the selection conditions, the display apparatus displays a UI including a setting code for setting the external device as a control object of a remote controller device in operation S620.

Here, the setting code includes a code value corresponding to an interface type. In more detail, the code value corresponding to the interface type may be a code value which is to select an interface to which the selected external device is connected, so as to display an image signal output from the selected external device on the display apparatus.

Also, the setting code may further include a unique key code value of the selected external device and a code value corresponding to a type of the selected external device.

If information regarding a plurality of groups into which a plurality of external devices are classified is displayed on a UI, and one of the plurality of groups is selected in operation S610, external devices of the selected group are classified according to brands and models to be displayed on the UI. If one of the classified external devices is selected, interface information for selecting an interface type to which the selected external device is connected may be displayed on the UI to select one of the plurality of external devices.

In the displaying method according to the present exemplary embodiment, if a code value having preset digits is input from the remote controller device, a confirm key signal is received. If the confirm key signal is received, a determination is made as to whether the code value input into the remote controller device corresponds to the setting code. If it is determined that the code value input into the remote controller device corresponds to the setting code, a connection port connected to the selected external device is selected. If it is determined that the code value input into the remote controller device does not correspond to the setting code, a message for inducing a re-entry of the setting code may be output.

In operation S610, the UI may display an input code display area for sequentially displaying code values input from the remote controller device and information regarding the setting code along with the setting code.

Operation S620 may include sub-operations: detecting a unique key code value corresponding to the selected external device from pre-stored unique key code values; determining a code value corresponding to a type of the selected external device; checking a connection port to which the selected external device is connected to determine a code value corresponding to the interface type; combining the detected unique key code value with the determined code values to generate the setting code; and generating and displaying the UI which displays the setting code in an area.

FIG. 7 is a flowchart illustrating a method of setting a remote controller device by suing a display apparatus according to an exemplary embodiment.

In operation S710, selection conditions of a user for an external device connected to the display apparatus are input.

In operation S720, a code value corresponding to a setting code is input to set the selected external device as a control object. Here, the setting code includes a code value corresponding to an interface type, and the code value corresponding to the interface type may be a code value which is to select an interface type to which the selected external device is connected, so as to display an image signal output from the selected external device on the display apparatus.

In operation S730, the input setting code is transmitted to the display apparatus.

The setting code may further include a unique key code value of the selected external device and a code value corresponding to a type of the selected external device.

If a code value having preset digits is input from a remote controller device after operation S730, a confirm key signal may be transmitted to the display apparatus.

In the above-described exemplary embodiment, the setting of the external device as the control object according to the setting code and the transmitting of the setting code to the display apparatus 100 are sequentially performed but may be simultaneously performed.

The present inventive concept can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A displaying method of a display apparatus which is connected to at least one external device and which communicates with a remote controller, the displaying method comprising:
acquiring selection conditions for the at least one external device connected to the display apparatus; and
if an external device from among the at least one external device is selected according to the selection conditions, displaying a first user interface (UI) comprising a setting code for setting the selected external device as a control object of the remote controller device,
wherein the setting code comprises code values corresponding to interface types of the display apparatus and the selected external device.

2. The displaying method as claimed in claim 1, wherein the setting code further comprises a unique key code value of the selected external device.

3. The displaying method as claimed in claim 1 or 2, wherein the setting code further comprises a code value corresponding to a type of the selected external device.

4. The displaying method as claimed in anyone of claims 1 to 3, wherein a code value from among the plurality of code values is for selecting an interface type to which the selected external device is connected, and for displaying an image signal output from the selected external device on the display apparatus.

5. The displaying method as claimed in anyone of claims 1 to 4, wherein the displaying method further comprises: if a first code value having preset digits is received from the remote controller device, receiving a confirm key signal;
if the confirm key signal is received, determining whether a second code value is received from the remote controller device corresponding to the setting code; and
if the second code value corresponds to the setting code, selecting a connection port connected to the selected external device, and if the second code value does not correspond to the setting code, outputting a message which requests a re-entry of the setting code.

6. The displaying method as claimed in anyone of claims 1 to 5, wherein the first UI displays an input code display area, which displays code values received from the remote controller device, and displays information regarding setting information and the setting code.

7. The displaying method as claimed in anyone of claim 1 to 6, wherein the acquiring of the selection conditions comprises:
displaying information regarding at least one group, into which a plurality of devices are classified by type, on a second UI;
if one of the at least one group is selected, classifying devices of the selected one of the plurality of groups by brand and model and displaying the classified devices on the second UI; and
if one of the classified devices is selected, displaying interface information, for selecting an interface type to which the selected device is connected, on the second UI.

8. The displaying method as claimed in anyone of claims 1 to 7, wherein the displaying of the first UI comprises:
detecting a unique key code value corresponding to the selected external device from stored unique key code values;
determining a first code value corresponding to a type of the selected external device;
checking a connection port, to which the selected external device is connected, to determine a second code value corresponding to an interface type;
combining the detected unique key code value with the determined first and second code values to generate the setting code; and
displaying a second UI including the setting code.

9. A display apparatus which is connected to at least one external device among a plurality of external devices comprising:
a display unit;
a storage unit which stores setting codes respectively matching with the plurality of external devices;
a connector which is connected to the least one external device from among the plurality of external devices;
a signal receiver which receives a user command from the remote controller device; and
a controller which, if selection conditions for one of the at least one external device connected to the display apparatus are acquired, controls the display unit to display a user interface (UI) comprising a setting code for setting a selected external device, which is selected from among the at least one external device according to the selection conditions, as a control object of the remote controller device,
wherein the setting code corresponds to an interface type.

10. The display apparatus as claimed in claim 9, wherein the setting code comprises a unique key code value of the selected external device.

11. The display apparatus as claimed in claim 9 or 10, wherein the setting code comprises a code value corresponding to a type of the selected external device.

12. The display apparatus as claimed in anyone of claim 9 to 11, wherein the interface type includes a code value which corresponds to a type of interface to which the selected external device is connected.

13. The display apparatus as claimed in anyone of claims 9 to 12, wherein if a confirm key signal is received from the remote controller device via the signal receiver, the controller determines whether a code value received from the remote controller device corresponds to the setting code,
wherein if the code value corresponds to the setting code, the controller selects a connection port connected to the selected external device, and
wherein if the code value does not correspond to the setting code, the controller outputs a message requesting a re-entry of the setting code.

14. The display apparatus as claimed in anyone of claims 9 to 13, wherein the UI displays an input code display area, which displays code values received from the remote controller device, information regarding the setting information and the setting code.

15. A remote controller device which communicates with a display apparatus and an external device connected to the display apparatus, the remote controller device comprising:
an input unit which receives a setting code for the external device;
a controller which receives a first code value corresponding to the setting code to set the external device as a control object; and
a transmitter which transmits the setting code to the display apparatus,
wherein the setting code comprises a second code value corresponding to an interface type.
